# EUROPEAN PATENT SPECIFICATION

(11) **EP 4 162 153 B1**
(45) Date of publication and mention of the grant of the patent: **11.09.2024**
(21) Application number: 21729407.3
(22) Date of filing: 19.05.2021
(51) Int. Cl.: F02B 19/16, F02M 21/02, F02B 19/10, F02B 19/12

(54) **PRE-COMBUSTION CHAMBER ASSEMBLY**
VORBRENNKAMMERANORDNUNG
ENSEMBLE CHAMBRE DE PRÉCOMBUSTION

(30) Priority: 05.06.2020 GB 202008527
(43) Date of publication of application: 12.04.2023
(73) Proprietor: Caterpillar Energy Solutions GmbH, 68167 Mannheim (DE)
(72) Inventor: TRINKEL, Ralf, 68167 Mannheim (DE); DREHOBL, Enrico, 68167 Mannheim (DE); SCHMITZ, Andreas, 68167 Mannheim (DE)
(74) Representative: Novagraaf Group
(86) International application number: PCT/EP2021/025187
(87) International publication number: WO 2021/244775

(56) References cited:
- EP-A1- 2 977 582
- GB-A- 1 464 610
- JP-U- H0 673 335

## Description

### Technical Field

The present invention refers to a pre-combustion chamber assembly for use in an internal combustion engine, in particular a gas engine, and to an internal combustion engine which is equipped with such a pre-chamber combustion assembly.

### Technological Background

Internal combustion engines and especially internal combustion engines which are powered with a lean fuel air mixture of a gaseous fuel and air, for example a mixture of natural gas and air, may comprise a pre-chamber, which is also referred to as a pre-combustion chamber, per cylinder for ignition purposes. Large-bore engines may benefit from those pre-chambers as it is otherwise difficult to consistently achieve complete and thorough combustion using lean fuel air mixtures.

Known pre-chamber arrangements typically comprise a pre-chamber tip including the actual pre-chamber which is defined by an encircling wall of the tip. Flow transfer passages are fluidly connecting the pre-chamber and the exterior of the pre-chamber arrangements, and in particular fluidly connecting the pre-chamber and the main combustion chamber of the respective cylinder. The flow transfer passages allow the flow of the lean mixture of gaseous fuel and air from the main combustion chamber into the pre-chamber during the compression stroke. The lean mixture of gaseous fuel and air in the pre-chamber is then ignited in the pre-chamber by an igniter such as a spark plug. The ignition of the lean mixture causes a flame front of hot gases that propagates from the pre-chamber through the flow transfer passages into the main combustion chamber. The flame front is led by the flow transfer passages to form ejecting torches which are directed in different directions such that a homogenous and more preferred ignition of the gaseous mixture in the main combustion chamber can be achieved.

In preferred embodiments, the lean mixture of the gaseous fuel and air which is transferred into the pre-chamber at the compression stroke of the cylinder can also be enriched by adding small quantities of gaseous fuel directly into the pre-chamber via a separate fuel feed passage and, consequently, the enriched mixture is ignited by the spark plug.

The tip of the pre-chamber arrangement experiences high temperature loads during operation and is thus particular prone to wear. Accordingly, it is required to maintain or replace pre-chamber arrangement after certain runtime periods which is usually cost and time consuming.

For avoiding that the whole pre-chamber arrangement needs to be replaced during maintenance, the use of pre-chamber assemblies is known which allow for interchangeably mounting the tip to a carrier of the pre-chamber assembly.

For example, EP 2 977 582 A1 discloses a pre-chamber assembly with an interchangeable tip. Further technological background is known from GB 1 464 610 A and JP H06 73335 U.

### Summary of the Invention

Starting from the prior art, it is an objective to provide an improved design of a pre-combustion chamber assembly which in particular contributes to simplified installation and maintenance procedures of the pre-combustion chamber assembly in an internal combustion engine. Further, it is an objective to provide an internal combustion engine which is equipped with such a pre-combustion chamber assembly.

This objective is solved by the subject matter according to the independent claims. Preferred embodiments are set forth in the present specification, the Figures as well as the dependent claims.

Accordingly, a pre-combustion chamber assembly for use in an internal combustion engine is provided which comprises a pre-combustion chamber tip and a carrier which are releasably mounted to one another. The tip and the carrier are designed such that, in an engaged state of the tip and the carrier, the tip is dis-engageable from the carrier upon being displaced relative to the carrier along a release direction which is transverse to a longitudinal axis of the assembly. The assembly is configured to be mounted to a cylinder head of the internal combustion engine such that the tip is force-fittingly connected to the carrier by being pressed against the carrier.

Furthermore, an internal combustion engine, in particular a gas engine, is provided which is equipped with the above-described pre-combustion chamber assembly.

Since the provided internal combustion engine comprises the above described pre-combustion chamber assembly, technical features which are described in connection with the pre-combustion chamber assembly in the present disclosure may also refer and be applied to the proposed internal combustion engine, and vice versa.

### Brief Description of the Drawings

The present disclosure will be more readily appreciated by reference to the following detailed description when being considered in connection with the accompanying drawings in which:
Fig. 1 schematically shows a longitudinal section through a pre-combustion chamber assembly in a state in which it is installed in an internal combustion engine;
Fig. 2 schematically shows a perspective view of the pre-combustion chamber assembly depicted in Figure 1 in an uninstalled state;
Fig. 3 schematically shows a perspective view of a pre-combustion chamber assembly according to a further embodiment in a disengaged state; and
Fig. 4 schematically show a side view of a part of the pre-combustion chamber assembly depicted in Figure 3.

### Detailed Description of Preferred Embodiments

In the following, the invention will be explained in more detail with reference to the accompanying figures. In the Figures, like elements are denoted by identical reference numerals and repeated description thereof may be omitted in order to avoid redundancies.

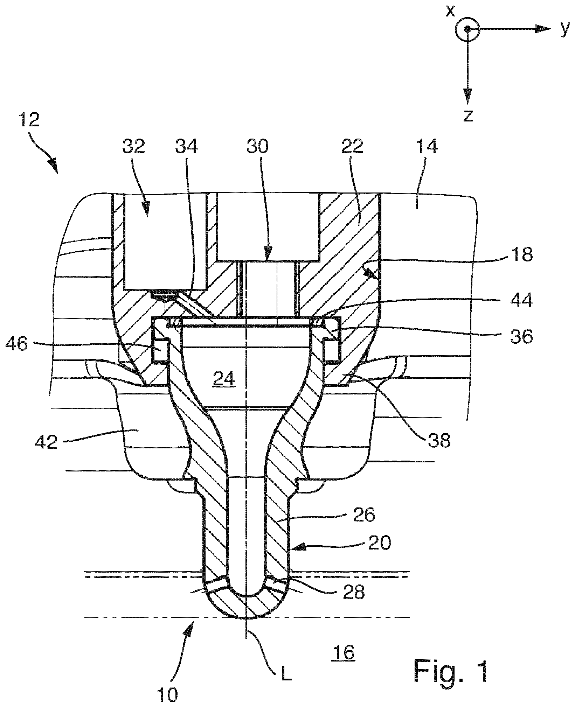

Figure 1 shows a pre-combustion chamber assembly 10, also referred to as the "assembly" in the following, which is installed in an internal combustion engine, in particular a gas engine which is powered with a lean fuel air mixture of a gaseous fuel and air, for example a mixture of natural gas and air. In Figure 1, a section of one exemplary cylinder 12 of the engine is shown. The engine preferably comprises a plurality of cylinders, for example six, eight or twelve cylinders, wherein one pre-combustion chamber assembly 10 is provided per cylinder.

In the following, the structural and function configuration of the assembly 10 installed in the cylinder 12 depicted in Figure 1 and associated to the present invention is described which applies accordingly to the other assemblies associated to the other cylinders of the engine, respectively.

In Figure 1, the assembly 10 is shown in a mounted state in which it is firmly fastened to a cylinder head 14 of the cylinder 12 associated thereto. In this state, the assembly 10 protrudes into a combustion chamber 16 formed within the cylinder 12.

The assembly 10 has an elongated shape. In other words, an extension of the assembly 10 along its longitudinal axis L is greater than along a traverse direction, i.e. being travers to the longitudinal axis L. In the mounted state, the assembly 10 is received in a mounting recess 18 in the form of a through-hole provided in the cylinder head 14. An inner surface of the mounting recess 18 has an inner surface which is designed complementary to a part of an outer surface of the assembly 10 such that, in the mounted state, the inner surface of the mounting recess 18 and the outer surface of the assembly 10 are in tight contact. For installing the assembly 10 on the cylinder 12, i.e. the cylinder head 14, the assembly 10 is inserted into the recess from outside the cylinder 12 along a assembling direction until the inners surface of the mounting recess 18 is in tight contact to the outer surface of the assembly 10 such that a tip portion of the assembly 10 is inserted into the combustion chamber 16. Accordingly, for dissembling the assembly 10 from the cylinder, the assembly 10 is removed from the cylinder 12 by being displaced in a disassembling direction which is opposed to the assembling direction. The assembling and dissembling directions are parallel to the longitudinal axis L of the assembly 10.

Further, the assembly 10 is provided with a multi-part configuration. In other words, the assembly 10 is built up from multiple pieces. Specifically, the assembly 10 comprises a pre-combustion chamber tip 20, also referred to as the "tip" in the following, and a carrier 22 which are releasably mounted to one another. The tip 20 and the carrier 22 are provided in the form of turning parts, i.e. produced, inter alia, by turning, e.g. on a lathe. Accordingly, the tip 20 and the carrier 22 are made from a semi-finished product having a symmetry about an axis which, in the shown configuration, coincides with a longitudinal axis L of the assembly 10, but alternatively may also be displaced, parallel and/or traverse to the longitudinal axis L.

The tip 20 is configured to protrude into the combustion chamber 16 in the mounted state of the assembly 10 and includes a pre-combustion chamber 24 which is defined and delimited by an encircling wall 26 of the tip 20. Flow transfer passages 28 are fluid-communicatively connecting the pre-combustion chamber 24 and the exterior of the assembly 10, i.e. the pre-combustion chamber 24 and the main combustion chamber 16 of the cylinder 12. By such a configuration, the flow transfer passages 28 are configured to allow a flow of the fuel air mixture form the main combustion chamber 16 into the pre-combustion chamber 24 during compression stroke of a piston (not shown) accommodated in the cylinder 12.

For igniting the fuel air mixture present in the pre-combustion chamber 24, an ignition device (not shown), for example a spark plug, is received in the carrier 22 such that a tip portion thereof protrudes into the pre-combustion chamber 24. The carrier 22 is provided with an ignition device receiving recess 30 which extends lengthwise through the carrier 22 and which is designed to receive the ignition device.

The ignition device is configured to ignite the fuel air mixture in the pre-combustion chamber 24 which causes a flame front of hot gases that propagates from the pre-chamber through the flow transfer passages into the main combustion chamber. By doing so, the flame front is led by the flow transfer passages 28 to form ejecting torches which cause a homogenous ignition of the gaseous mixture in the main combustion chamber 16.

Optionally, the carrier 22 may further accommodate or comprise an injection device for injecting fuel medium into the pre-combustion chamber 24. Specifically, the injection device may be configured to directly inject fuel medium into the pre-combustion chamber 24, i.e. without guiding the fuel medium through the main combustion chamber 16 and without mixing it with air before entering the pre-combustion chamber 24. In this way, the fuel air mixture transferred into the pre-combustion chamber from the main combustion chamber 16 through the flow transfer passages 28 at the compression stroke is enriched by being supplemented with the fuel medium discharged from the injection device. In such a configuration, the carrier 22 may be provided with an injection device receiving recess 32 for accommodating the injection device in the assembly 10. A fuel supply passage 34 fluid-communicatively connects the further receiving recess 32 to the pre-combustion chamber 24. As such, the fuel supply passage 34 guide fuel medium discharged from the injection device into the pre-combustion chamber 24.

As set forth above, the assembly 10 is configured and designed such that the tip 20 and the carrier 22 are releasably coupled to one another. In other words, the assembly 10 is configured and designed such that the tip 20 can be selectively engaged with or disengaged from the carrier 22. By such a configuration, the assembly 10 is provided with a modular design allowing that its tip portion, i.e. the pre-combustion chamber tip 20, can be interchangeably replaced. As a result, the portion of the assembly 10 which is particularly prone to wear during operation can be easily renewed, i.e. by replacing the tip 20. When having reached the end of its intended operating duration or lifetime, the tip 20 can be replaced by a new tip 20. Compared to known pre-combustion chamber arrangement in which the tip and the carrier component are inextricably coupled to one another, e.g. by weld, the proposed solution does not require replacement of the whole pre-combustion chamber arrangement when the tip has reached the end of its lifetime. In this way, the proposed assembly contributes to a cost-efficient maintenance and repair of the engine.

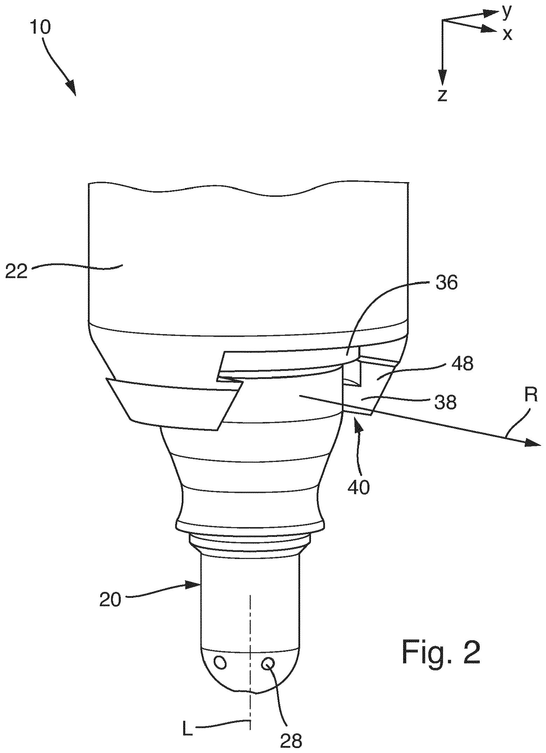

Compared to Fig. 1 in which the assembly is depicted in the mounted state, i.e. installed in the cylinder head 14, Fig. 2 shows the assembly 10 in a state in which it is decoupled from the engine. However, in both configurations and states depicted in Fig. 1 and 2, the tip 20 is partially received in and engage with the carrier 22.

In the following, the structural interface between the tip 20 and the carrier 22 is described which enables to releasably couple the tip 20 to the carrier 22.

The tip 20 comprises an engagement section which is arranged opposed to a tip end section of the tip 20 and which is designed to be structurally coupled to and received in the carrier 22. To that end, the carrier 22 comprises a locking section which is constituted by a recessed portion at a front end of the carrier 22 and which is designed complementary to the engagement section of the tip 20.

The engagement section of the tip 20 and the locking section of the carrier 22 are designed such that a form-fit or form-locking connection between the tip 20 and the carrier 22 is provided along the longitudinal axis L when being in the engaged state. The form-fit connection between the tip 20 and the carrier 22 is designed to lock a translational movement of the tip 20 relative to the carrier 22 along the longitudinal axis L in a direction pointing away from the carrier 22. Accordingly, by being provided with the form-fit connection between the tip 20 and the carrier 22, the tip 20 and the carrier are prevented from being disengaged from one another when the tip 20 and the carrier 22 are subject to opposing forces, i.e. pointing away from one another, along the longitudinal axis L.

For interlocking the tip 20 and the carrier 22 in the engaged state along the longitudinal axis L, the engagement section of the tip 20 is provided with an engagement collar 36 which is designed complementary to an undercut section 38, also referred to as locking element, of the carrier's locking section. Upon being displaced relative to the carrier 22 along the longitudinal axis L in the direction pointing away from the carrier 22, the collar 36 of the tip 20 is pushed against and tightly fit to the undercut section 38 of the carrier 22, thereby engaging the form-fit connection.

In the context of the present disclosure, the term "engaged state" refers to any state in which the tip 20 is engaged or interlocked with the carrier 22. Thus, in both configurations depicted in Fig. 1 and 2, the tip 20 and the carrier 22 are shown in an engaged state. Specifically, in Fig. 1, the assembly 10 is in its mounted state, i.e. being installed in the cylinder head 14, in which the tip 20 is force-fittingly connected and thus tightly fit to the carrier 22 as will be described below. In Fig. 2, by contrast, the assembly 10 is decoupled from the engine, i.e. the cylinder head 14, and the tip 20 is loosely coupled to, but still engaged with the carrier 22 by means of the form-fit connection.

Further, the term "disengaged state" refers to a state of the assembly 10 in which the tip 20 is disengaged from the carrier 22, i.e. is not received or accommodated in the locking section thereof. Thus, the tip 20 is not limited in its degrees of freedom relative to the carrier 22 compared to the engaged state in which at least one degree of freedom of the tip 20 relative to the carrier 22 is locked.

In the proposed assembly 10, the tip 20 and the carrier 22 are designed such that, in the engaged state of the tip 20 and the carrier 22, the tip 20 is dis-engageable from the carrier 22 upon being displaced relative to the carrier 22 along a release direction R which is transverse to the longitudinal axis L of the assembly 10. As can be gathered from Fig. 2, in the shown configuration, the release direction R is perpendicular or substantially perpendicular to the longitudinal axis L. In other words, in the state depicted in Fig. 2, the tip 20 can be disengaged or removed from the carrier 22 upon moving the tip 20 in the release direction R relative to the carrier 22. By doing so, the tip 20 is removed from the carrier 22 upon being guided through a removal/insertion opening or recess 40. Accordingly, in a state in which the assembly 10 is in the disengaged state, the tip 20 is engageable to the carrier 22 upon being displaced relative to the carrier 22 along a locking direction which is opposed to the release direction R.

The removal/insertion recess 40 is provided at one side at a tip end of the carrier 22. Alternatively, the removal/insertion recess 40 may be provided at opposing sides of the carrier 22. In this alternative configuration, the tip 20 may be engaged with or disengaged from the carrier 22 either by being moved relative to the carrier 22 in the release direction R or in a direction opposed thereto. Further, the removal/insertion recess 40 of the carrier 22 has a shape, i.e. an inner contour and an inner surface, which is designed complementary to an outer shape, i.e. an outer contour and outer surface of the engagement section, of the tip 20. Accordingly, for engaging the tip 20 with the carrier 22, the two components need to be properly oriented to one another. Specifically, in order to allow that the tip 20 can be inserted into the removal/insertion recess 40, the locking section of the carrier 22, i.e. its removal/insertion recess 40, requires that the tip 20 is oriented such that it longitudinal axis is parallel to the longitudinal axis of the carrier 22. More specifically, the longitudinal axis of the tip 20 needs to lie within a plane to which the locking section of the carrier 22 is mirror symmetric.

As set forth above, Fig. 1 shows the assembly 10 in the mounted state in which the tip 20 is force-fittingly connected and thus tightly fit to the carrier 22. In other words, in the mounted state, the tip 20 is force-fittingly connected to the carrier 22 at a connecting surface. The connecting surface is constituted by a front surface of the carrier 22 and an end surface of the tip 20. In the shown configuration, the connecting surface extends substantially perpendicular to the longitudinal axis and substantially in parallel to the release direction R.

In the mounted state, as set forth above, the tip 20 is force-fittingly connected to the carrier 22. For doing so, the assembly 10 is configured to be mounted to a cylinder head configuration of the internal combustion engine such that the tip 20 is force-fittingly connected to the carrier 22 by being pressed against the carrier 22. Specifically, in the mounted state, the tip 20 is coupled to a cylinder head plate 42 and the end surface of the tip 20 is pressed against the front surface of the carrier 22 hold in the cylinder head 14.

A sealing element 44, in particular provided in the form of a sealing ring, is provided between the tip 20 and the carrier 22 at the connecting surface. Specifically, the end surface of the tip 20 is provided with a circumferential groove which encircles the pre-combustion chamber 24 and which is configured to receive the sealing element 44. By such a configuration, a tight connection between the tip 20 and the carrier 22 of the assembly 10 may be ensured. Alternatively or additionally, the front end of the carrier 22 may be provided with a circumferential groove for receiving the sealing element 44.

As can be gathered from Fig. 1, a bearing play 46 is provided between the collar 36 of the tip 20 and the undercut section 38 of the carrier 22 along the longitudinal axis L. Thus, in a state in which the tip 20 is loosely coupled, i.e. not force-fittingly connected to the carrier 22, the tip 20 is allowed to be displaced relative to the carrier 22 along the longitudinal axis L to a certain extent, i.e. which is defined and delimited by the bearing play 46. In other words, in the engaged state, the tip 20 is displaceable relative to the carrier 22 along the longitudinal axis L to a certain extent. This is achieved by the form-fit connection between the tip 20 and the carrier 22 which is provided with the bearing play 46 along the longitudinal axis L.

More specifically, the assembly 10 is designed such that, in the engaged state, the tip 20 is displaceable relative to the carrier 232 along the longitudinal axis L between a first end position and a second end position. In the context of the present invention, the term "end position" refers to a position beyond which the tip cannot be further moved relative to the carrier 22 along the longitudinal axis L.

In Fig. 1 and 2, the tip 22 is depicted in its first end position. The assembly 10 is designed such that a translational movement of the tip 20 relative to the carrier 22 along the release direction R is allowed or enabled when the tip 20 is arranged in the first end position. In this position, the end surface of the tip 20 is fit to or contacts the front end of the carrier 22.

In the second end position, the tip 20 is displaced relative to the carrier 22 along the longitudinal axis L in the direction pointing away from the carrier 22 to a maximum extent compared to the first end position. In the second end position, the collar 36 of the tip 20 contacts the undercut section 38. Specifically, a circumferential surface of the collar 36 which faces the undercut section 38 in a longitudinal direction lies upon an opposing circumferential inner surface of the undercut section 38.

As can be gathered from Fig. 2, the locking section of the carrier 22 is provided with a locking protrusion 48 which delimits the removal/insertion recess 40. The locking protrusion 48 is designed such that it prevents or blocks a movement of the tip 20 in the release direction R relative to the carrier 22 when the tip 20 is arranged in the second end position. In other words, when the tip 20 is placed in the second end position, a translational movement of the tip 20 relative to the carrier 22 along the release direction R is locked.

By such a configuration, the proposed assembly 10 may prevent that the tip 20 is unintendedly disengaged from the carrier 22, for example during installation or maintenance of the assembly 10. As to substance, in order to replace or disengage the tip 20 from the carrier 22, the tip 20, at first, is required to be moved into first end position before it can be released from the engagement with the carrier 22, i.e. upon being moved into the release direction R. If the tip 20 is not moved into the first end position, it cannot be released from the carrier 22. In other words, when being placed in the second end position, the form-looking connection between the tip 20 and the carrier 22 is provided along the release direction R which prevents the tip 20 from being displaced relative to the carrier 22 in the release direction R and thus for being disengage from the carrier 22. However, when being placed in the first end position, the form -looking connection between the tip 20 and the carrier 22 is released, thereby allowing that the tip 22 can be displaced relative to the carrier 22 in the release direction R and thus from being dis-engaged from the carrier unit 22.

In the configuration shown in Fig. 1 and 2, an outer surface of the engagement section of the tip 20 is symmetric around the longitudinal axis of the tip 20. Accordingly, the tip 20 may be engaged to the carrier 22 in any rotational orientation around its longitudinal axis. In other words, when being engaged with the carrier 22, i.e. loosely coupled thereto, the tip 20 can be rotate around its longitudinal axis relative to the carrier 22.

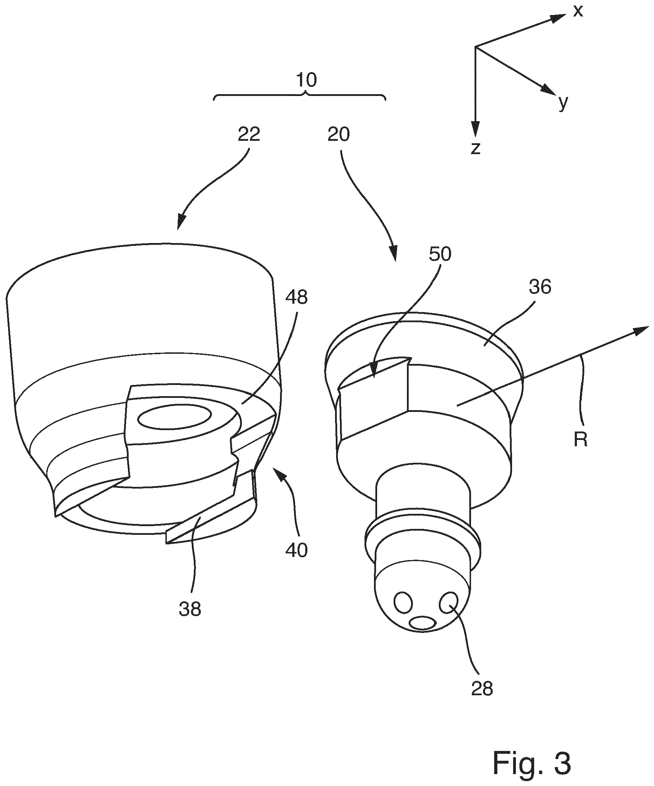

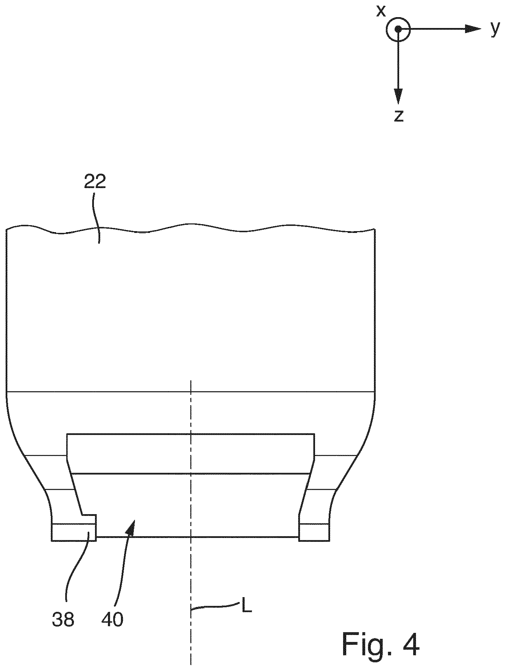

Figs. 3 and 4 show a pre-combustion chamber assembly 10 according to a further embodiment in which, compared to the configuration depicted in Fig. 1 and 2, a relative rotational orientation between the tip 20 and the carrier 22 is pre-set. Accordingly, in this configuration, the tip 20 is engageable to the carrier 22 in merely one predefined rotational orientation around its longitudinal axis relative to the carrier 22. In other words, the assembly 10 is designed such that the tip 20 can only be inserted into the carrier body 22 in one preset relative rotational orientation between the tip 20 and the carrier 22. In this way, an orientation of the tip 20 in the mounted state of the assembly 10 is predefined, thereby facilitating proper installation of the assembly 10 in the cylinder 12.

For doing so, the tip 20, i.e. its engagement section, is provided with an outer surface or contour which is non-symmetric around its longitudinal axis. In other words, an outer contour of a cross-sectional profile of the engagement section, in particular which extends perpendicular to the longitudinal axis of the tip 20, is not point symmetric. Specifically, for providing the non-symmetric shape of the tip 20, the outer surface thereof is provided with a coding recess 50 which ensures that the tip can only be inserted into the carrier 22 in one rotational orientation relative to the carrier 22. Accordingly, as can be gathered from Fig 4, the removal/insertion recess 40 is provided with a shape that is non-mirror symmetric in particular relative to a plane of symmetry which is spanned by the release direction R and the longitudinal axis L.

Further, in the configuration depicted in Fig. 3 and 4, the assembly 10 is designed such that, when being positioned into its first end position in which the end surface of the tip 20 fits to the front surface of the carrier 22, a translational movement of the tip 20 relative to the carrier 22 along the release direction R is locked by means of the locking protrusion 48. However, when being placed in the second end position as depicted in Fig. 4, the translational movement of the tip 20 relative to the carrier 22 along the release direction R is released.

It will be obvious for a person skilled in the art that these embodiments and items only depict examples of a plurality of possibilities. Hence, the embodiments shown here should not be understood to form a limitation of these features and configurations.

According to the invention, a pre-combustion chamber assembly for use in an internal combustion engine is provided, comprising a pre-combustion chamber tip and a carrier which are releasably mounted to one another. The assembly is configured and designed to be mounted to a cylinder head of the engine such that the tip is force-fittingly connected to the carrier by being pressed against the carrier.

The tip and the carrier are designed such that, in an engaged state of the tip and the carrier, the tip is dis-engageable form the carrier upon being displaced relative to the carrier along a release direction which is transverse to a longitudinal axis of the assembly.

Further, the assembly may be configured and designed such that, in the engaged state of the tip and the carrier, a form-fit connection between the carrier and the tip is provided which locks a translational movement of the tip relative to the carrier along the longitudinal axis, particularly in a direction pointing away from the carrier.

Still further, the carrier and the tip are designed such that, in an dis-engaged state of the tip and the carrier, the tip is engageable to the carrier upon being displaced relative to the carrier along a locking direction being opposed to the release direction.

Typically, during installation or de-installation of pre-combustion chamber arrangements, a pre-combustion chamber arrangement is inserted into a cylinder head or removed therefrom by being moved along an assembling or disassembling direction which is parallel to its longitudinal axis. In order to facilitate installation, deinstallation or maintenance procedures, the proposed pre-combustion chamber assembly is provided with a structural configuration in which the tip is dis-engageable from the carrier upon being moved relative to carrier in a direction being transverse to the assembling or dissembling direction, i.e. the longitudinal axis of the assembly. In this way, the assembly may be prevented from being unintendedly disengaged or disassembled when being installed to or deinstalling from an engine, thereby facilitating installation or maintenance procedures for an operator.

The proposed pre-combustion chamber assembly may be intended to be used in any suitable internal combustion engines, such as large-bore engines employed in vessels or power plants. Specifically, the assembly may be used in gas engines, i.e. which run on gaseous fuel, such as natural gas. However, the proposed assembly is not limited to these applications.

When being equipped in an engine, the proposed assembly may be associated to one cylinder. Accordingly, the number of assemblies installed in the engine may depend on the number of cylinders. Specifically, an engine may be equipped with one assembly per cylinder.

More specifically, the tip and the carrier may be connected to one another at a connecting surface. The connecting surface may be constituted by an end surface of the tip and a front surface of the carrier which, in the engaged state, face each other. The assembly may be provided such that the connecting surface is perpendicular to the longitudinal axis of the assembly and/or parallel to the release direction.

In a further development, a sealing element, in particular a sealing ring, may be provided at the connecting surface, i.e. between the tip and the carrier. Specifically, the sealing element may be received in a circumferential groove provided at the tip, in particular at its end surface, and/or the carrier, in particular at its front surface.

Additionally or alternatively, the carrier and the tip may be configured and designed such that, in the engaged state, the tip is displaceable relative to the carrier along the longitudinal axis to a certain extent. For doing so, the form-fit connection between the tip and the carrier may be provided with a bearing play along the longitudinal axis.

In a further development, the assembly may be configured such that, in the engaged state, the tip is displaceable relative to the carrier along the longitudinal axis between a first position, in particular a first end position, and a second end position, in particular a second end position. When being placed in the first position, a translational movement of the tip relative to the carrier along the release direction may be allowed, and wherein when being place in the second end position, the translational movement of the tip relative to the carrier along the release direction may be locked.

Additionally, the assembly may be provided such that in the mounted state in which the tip and the carrier contact each other at the connecting surface, the tip is positioned in the first or second position relative to the carrier.

In a further development, the assembly may be designed and configured such that, in the engaged state, a relative rotational orientation between the carrier and the tip, in particular around the longitudinal axis, is preset or predefined, in particular structurally fixed. Further, the tip may be provided with an engagement section which forms a structural interface for releasably mounting the tip to the carrier. For locking or coding the relative rotational position between the tip and the carrier in the engaged state, the engagement section may be provided with a shape or contour, in particular an outer shape or contour, which is non-symmetric around a longitudinal axis of the tip.

Furthermore, an internal combustion engine, in particular a gas engine, may be provided which is equipped with a pre-combustion chamber assembly as described above.

### Industrial Applicability

With reference to the Figures, a pre-combustion chamber assembly 10 for an internal combustion engine is suggested, comprising a pre-combustion chamber tip 20 and a tip carrier 22 which are releasably mounted to one another. The tip 20 and the carrier 22 are designed such that, in an engaged state of the tip 20 and the carrier 22, the tip 20 is dis-engageable form the carrier 22 upon being displaced relative to the carrier 22 along a release direction R which is transverse to a longitudinal axis L of the assembly 10.

The pre-combustion chamber assembly 10 as mentioned above is applicable in internal combustion engines and especially in internal combustion engines which are powered with a lean fuel air mixture or a gaseous fuel and air, for example a mixture of natural gas and air. It may replace conventional pre-combustion chamber arrangements and may serve as a replacement or retrofit part.

## Claims

1. Pre-combustion chamber assembly (10) for use in an internal combustion engine, comprising a pre-combustion chamber tip (20) and a carrier (22) which are releasably mounted to one another, wherein the assembly (10) is suitable for being mounted to a cylinder head (14) of the internal combustion engine such that the tip is force-fittingly connected to the carrier (22) by being pressed against the carrier (22),
**characterized in that**
the tip (20) and the carrier (22) are designed such that, in an engaged state of the tip (20) and the carrier (22), the tip (20) is dis-engageable from the carrier (22) upon being displaced relative to the carrier (22) along a release direction (R) which is transverse to a longitudinal axis (L) of the assembly (10).

2. Pre-combustion chamber assembly according to claim 1, wherein in the engaged state of the tip (20) and the carrier (22), a form-fit connection between the tip (20) and the carrier (22) is provided which locks a translational movement of the tip (20) relative to the carrier (22) along the longitudinal axis (L) in a direction pointing away from the carrier (22).

3. Pre-combustion chamber assembly according to claim 1 or 2, wherein the tip (20) and the carrier (22) are designed such that, in an disengaged state of the tip (20) and the carrier (22), the tip (20) is engageable to the carrier (22) upon being displaced relative to the carrier (22) along a locking direction being opposed to the release direction (R).

4. Pre-combustion chamber assembly according to any one of claims 1 to 4, wherein a connecting surface between the tip (20) and the carrier (22) is constituted by an end surface of the tip (20) and a front surface of the carrier (22).

5. Pre-combustion chamber assembly according to claim 4, wherein the connecting surface is perpendicular to the longitudinal axis (L) or parallel to the release direction (R).

6. Pre-combustion chamber assembly according to any one of claims 1 to 5, further comprising a sealing element (44) which is received in a circumferential groove provided at the tip (20) or the carrier (22).

7. Pre-combustion chamber assembly according to any one of claims 1 to 6, wherein the tip (20) and the carrier (22) are configured such that, in the engaged state, the tip is displaceable relative to the carrier (22) along the longitudinal axis to a certain extent.

8. Pre-combustion chamber assembly according to any one of claims 2 to 7, wherein the form-fit connection between the tip (20) and the carrier (22) is provided with a bearing play (46) along the longitudinal axis (L).

9. Pre-combustion chamber assembly according to any one of claims 1 to 8, wherein in the engaged state, the tip (20) is displaceable relative to the carrier (22) along the longitudinal axis (L) between a first position and a second position, wherein when being placed in the first position, a translational movement of the tip (20) relative to the carrier (22) along the release direction (R) is allowed, and wherein when being place in the second end position, the translational movement of the tip (20) relative to the carrier (22) along the release direction (R) is locked.

10. Pre-combustion chamber assembly according to claim 9, wherein in the mounted state, the tip (20) is positioned in the first or second position relative to the carrier (22).

11. Pre-combustion chamber assembly according to any one of claims 1 to 10, wherein in the engaged state, a relative rotational orientation between the tip (20) and the carrier (22) is preset.

12. Pre-combustion chamber assembly according to any one of claims 1 to 11, wherein an engagement section of the tip (20) forming a structural interface for coupling the tip (20) to the carrier (22) has a shape or contour which is non-symmetric around a longitudinal axis of the tip (20).

13. Internal combustion engine, in particular gas engine, being equipped with a pre-combustion chamber assembly (10) according to any one of claims 1 to 12.

## Patentansprüche

1. Vorverbrennungskammeranordnung (10) zur Verwendung in einem Verbrennungsmotor, umfassend eine Vorverbrennungskammerspitze (20) und einen Träger (22), die lösbar aneinander montiert sind, wobei
die Anordnung (10) zum Montiertwerden an einem Zylinderkopf (14) des Verbrennungsmotors derart geeignet ist, dass die Spitze mit dem Träger (22) durch Gedrücktwerden an den Träger (22) kraftschlüssig verbunden ist,
**dadurch gekennzeichnet, dass** die Spitze (20) und der Träger (22) derart gestaltet sind, dass in einem Eingriffszustand der Spitze (20) und des Trägers (22), die Spitze (20) von dem Träger (22) trennbar ist, wenn sie relativ zu dem Träger (22) entlang einer Löserichtung (R) verschoben wird, die quer zu einer Längsachse (L) der Anordnung (10) verläuft.

2. Vorverbrennungskammeranordnung nach Anspruch 1, wobei in dem Eingriffszustand der Spitze (20) und des Trägers (22) eine formschlüssige Verbindung zwischen der Spitze (20) und dem Träger (22) bereitgestellt wird, die eine translatorische Bewegung der Spitze (20) relativ zu dem Träger (22) entlang der Längsachse (L) in eine Richtung sperrt, die von dem Träger (22) weg weist.

3. Vorverbrennungskammeranordnung nach Anspruch 1 oder 2, wobei die Spitze (20) und der Träger (22) derart gestaltet sind, dass in einem getrennten Zustand der Spitze (20) und des Trägers (22) die Spitze (20) mit dem Träger (22) in Eingriff bringbar ist, wenn sie relativ zu dem Träger (22) entlang einer Sperrrichtung verschoben wird, die der Löserichtung (R) entgegengesetzt ist.

4. Vorverbrennungskammeranordnung nach einem der Ansprüche 1 bis 4, wobei eine Verbindungsoberfläche zwischen der Spitze (20) und dem Träger (22) durch eine Endoberfläche der Spitze (20) und eine Vorderoberfläche des Trägers (22) gebildet wird.

5. Vorverbrennungskammeranordnung nach Anspruch 4, wobei die Verbindungsoberfläche senkrecht zu der Längsachse (L) oder parallel zu der Löserichtung (R) verläuft.

6. Vorverbrennungskammeranordnung nach einem der Ansprüche 1 bis 5, ferner umfassend ein Dichtungselement (44), das in einer umlaufenden Nut aufgenommen ist, die an der Spitze (20) oder dem Träger (22) bereitgestellt ist.

7. Vorverbrennungskammeranordnung nach einem der Ansprüche 1 bis 6, wobei die Spitze (20) und der Träger (22) derart konfiguriert sind, dass in dem Eingriffszustand die Spitze relativ zu dem Träger (22) entlang der Längsachse um ein gewisses Maß verschiebbar ist.

8. Vorverbrennungskammeranordnung nach einem der Ansprüche 2 bis 7, wobei die formschlüssige Verbindung zwischen der Spitze (20) und dem Träger (22) mit einem Lagerspiel (46) entlang der Längsachse (L) bereitgestellt ist.

9. Vorverbrennungskammeranordnung nach einem der Ansprüche 1 bis 8, wobei die Spitze (20) in dem Eingriffszustand relativ zu dem Träger (22) entlang der Längsachse (L) zwischen einer ersten Position und einer zweiten Position verschiebbar ist, wobei, wenn sie in der ersten Position platziert ist, eine translatorische Bewegung der Spitze (20) relativ zu dem Träger (22) entlang der Löserichtung (R) zugelassen ist, und wobei, wenn sie in der zweiten Endposition platziert ist, die translatorische Bewegung der Spitze (20) relativ zu dem Träger (22) entlang der Löserichtung (R) gesperrt ist.

10. Vorverbrennungskammeranordnung nach Anspruch 9, wobei die Spitze (20) in dem montierten Zustand in der ersten oder der zweiten Position relativ zu dem Träger (22) positioniert ist.

11. Vorverbrennungskammeranordnung nach einem der Ansprüche 1 bis 10, wobei in dem Eingriffszustand eine relative Drehausrichtung zwischen der Spitze (20) und dem Träger (22) voreingestellt ist.

12. Vorverbrennungskammeranordnung nach einem der Ansprüche 1 bis 11, wobei ein Eingriffsabschnitt der Spitze (20), der eine strukturelle Schnittstelle zum Koppeln der Spitze (20) mit dem Träger (22) ausbildet, eine Form oder Kontur aufweist, die um eine Längsachse der Spitze (20) herum nicht symmetrisch ist.

13. Verbrennungsmotor, insbesondere ein Gasmotor, der mit einer Vorverbrennungskammeranordnung (10) nach einem der Ansprüche 1 bis 12 ausgestattet ist.

## Revendications

1. Ensemble chambre de précombustion (10) destiné à être utilisé dans un moteur à combustion interne, comprenant une pointe de chambre de précombustion (20) et un support (22) qui sont montés l'un sur l'autre de manière amovible, dans lequel
l'ensemble (10) est approprié pour être monté sur une culasse (14) du moteur à combustion interne de telle sorte que la pointe est reliée par ajustement à force au support (22) en étant pressée contre le support (22),
**caractérisé en ce que** la pointe (20) et le support (22) sont conçus de telle sorte que, dans un état de mise en prise de la pointe (20) et du support (22), la pointe (20) peut être désolidarisée du support (22) en étant déplacée par rapport au support (22) le long d'une direction de libération (R) qui est transversale à un axe longitudinal (L) de l'ensemble (10).

2. Ensemble chambre de précombustion selon la revendication 1, dans lequel, dans l'état de mise en prise de la pointe (20) et du support (22), une liaison par ajustement entre la pointe (20) et le support (22) est pourvue qui verrouille un mouvement de translation de la pointe (20) par rapport au support (22) le long de l'axe longitudinal (L) dans une direction opposée au support (22).

3. Ensemble chambre de précombustion selon la revendication 1 ou 2, dans lequel la pointe (20) et le support (22) sont conçus de telle sorte que, dans un état désolidarisé de la pointe (20) et du support (22), la pointe (20) peut être mise en prise avec le support (22) lorsqu'elle est déplacée par rapport au support (22) le long d'une direction de verrouillage opposée à la direction de libération (R).

4. Ensemble chambre de précombustion selon l'une quelconque des revendications 1 à 4, dans lequel une surface de liaison entre la pointe (20) et le support (22) est constituée par une surface d'extrémité de la pointe (20) et une surface avant du support. (22).

5. Ensemble chambre de précombustion selon la revendication 4, dans lequel la surface de liaison est perpendiculaire à l'axe longitudinal (L) ou parallèle à la direction de libération (R).

6. Ensemble chambre de précombustion selon l'une quelconque des revendications 1 à 5, comprenant en outre un élément d'étanchéité (44) qui est reçu dans une rainure circonférentielle pourvue au niveau de la pointe (20) ou du support (22).

7. Ensemble chambre de précombustion selon l'une quelconque des revendications 1 à 6, dans lequel la pointe (20) et le support (22) sont conçus de telle sorte que, dans l'état de mise en prise, la pointe peut être déplacée par rapport au support (22) le long de l'axe longitudinal dans une certaine mesure.

8. Ensemble chambre de précombustion selon l'une quelconque des revendications 2 à 7, dans lequel la liaison par ajustement entre la pointe (20) et le support (22) est pourvue d'un jeu de palier (46) le long de l'axe longitudinal (L).

9. Ensemble chambre de précombustion selon l'une quelconque des revendications 1 à 8, dans lequel dans l'état de mise en prise, la pointe (20) est déplaçable par rapport au support (22) le long de l'axe longitudinal (L) entre une première position et une seconde position., dans lequel lorsqu'elle est placée dans la première position, un mouvement de translation de la pointe (20) par rapport au support (22) le long de la direction de libération (R) est autorisé, et dans lequel lorsqu'elle est placée dans la seconde position d'extrémité, le mouvement de translation de la pointe (20) par rapport au support (22) le long de la direction de libération (R) est verrouillé.

10. Ensemble chambre de précombustion selon la revendication 9, dans lequel dans l'état monté, la pointe (20) est positionnée dans la première ou la seconde position par rapport au support (22).

11. Ensemble chambre de précombustion selon l'une quelconque des revendications 1 à 10, dans lequel, dans l'état de mise en prise, une orientation de rotation relative entre la pointe (20) et le support (22) est prédéfinie.

12. Ensemble chambre de précombustion selon l'une quelconque des revendications 1 à 11, dans lequel une section de mise en prise de la pointe (20) formant une interface structurale pour accoupler la pointe (20) au support (22) a une forme ou un contour qui est non symétrique autour d'un axe longitudinal de la pointe (20).

13. Moteur à combustion interne, en particulier moteur à gaz, étant équipé d'un ensemble chambre de précombustion (10) selon l'une quelconque des revendications 1 à 12.
